# EUROPÄISCHE PATENTSCHRIFT

(11) **EP 3 098 127 B1**
(45) Veröffentlichungstag und Bekanntmachung des Hinweises auf die Patenterteilung: **10.03.2021**
(21) Anmeldenummer: 15466022.9
(22) Anmeldetag: 22.12.2015
(51) Int. Cl.: B60T 8/24, B60T 8/26

(54) **VORRICHTUNG ZUR BETÄTIGUNG EINER BREMSANLAGE EINES KRAFTFAHRZEUGES**
DEVICE FOR ACTUATING A BRAKE SYSTEM OF A MOTOR VEHICLE
DISPOSITIF DESTINE A L'ACTIONNEMENT D'UN DISPOSITIF DE FREINAGE D'UN VEHICULE AUTOMOBILE

(30) Priorität: 30.12.2014 CZ 20140970
(43) Veröffentlichungstag der Anmeldung: 30.11.2016
(73) Patentinhaber: Skoda Auto a.s., 29301 Mladá Boleslav (CZ)
(72) Erfinder: Junek, Petr, 47153 Svojkov (CZ); Klofec, Michal, 47201 Doksy (CZ); Kupka, Michal, 51722 Albrechtice nad Orlici (CZ)

(56) Entgegenhaltungen:
- DE-A1- 19 637 297
- US-A- 3 880 471

## Beschreibung

### Technisches Gebiet

Die Erfindung betrifft eine Vorrichtung zur Betätigung einer Bremsanlage, insbesondere einer Bremsanlage eines Kraftfahrzeuges, die mit der Funktion einer elektronischen Stabilitätskontrolle ESC ausgestattet ist.

### Bisheriger Stand der Technik

Derzeit werden bei Kraftfahrzeugen hydraulisch betätigte Bremsen verwendet, wo an der Vorderachse Scheibenbremsen und an der Hinterachse die Trommelbremsen angeordnet sind. Beide Bremsarten haben aufgrund ihres Funktionsprinzips unterschiedlichen Auflagedruck der Bremselemente, der bei den Scheibenbremsen einen Wert von 0,05 MPa aufweist, während er bei den Trommelbremsen bei 0,4 - 0,5 MPa liegt. Genannte Tatsachen führen dazu, dass bei einer langgezogenen Abwärtsfahrt, z.B. bei langen Bergabfahrten, wenn der Fahrer durch Bremsen mit niedrigem Druck in der Bremsanlage eine konstante Fahrzeuggeschwindigkeit hält, die vorderen Bremsen überbelastet werden. Die hinteren Trommelbremsen werden dabei unzureichend genutzt, da 0,4 - 0,5 MPa aus dem vom Fahrer entwickelten Druck nur gegen die Kraft der Druckfeder des inneren Bremsmechanismus verbraucht werden. Dies bewirkt hohe Wärmebelastung der vorderen Scheibenbremsen, da auf die Vorderbremsen eine Kraft entsprechend dem um ca. 0,4 MPa höheren Druck als bei den hinteren Bremsen einwirkt. Damit keine Verformung oder dauerhafte Beschädigung auftritt, muss eine Ableitung der Abwärme sichergestellt werden. Dazu dienen verschiedene Luftleitelemente der Bremskühlung, welche in der Frontpartie des Fahrzeuges angeordnet sind und die Kühlluft zu den wärmebelasteten Teilen der vorderen Scheibenbremsen zuführen. Nachteilig ist, dass die Verwendung dieser Teile den Luftwiderstand c_{w} erhöht, was folglich zur Erhöhung des Verbrauches sowie der CO₂ Werte führt.

Aus der DE 19637297 A1 ist ein Straßenfahrzeug bekannt bei dem die Fahrgeschwindigkeit waehrend einer Gefaellefahrt durch einen aktiven, elektronisch gesteuerten Bremseneingriff auf eine vorgegebene Sollgeschwindigkeit regelbar ist, und das mit einem Antiblockiersystem (ABS) und/oder einer Anfahr-Schlupf-Regelung (ASR) ausgeruestet ist. Die Bremskraftverteilung ist so eingestellt, daß im Normalfall nur die Räder der tiefer liegenden Achse gebremst werden. Erst wenn die Regelabweichung einen bestimmten Grenzwert überschreitet, werden zusätzlich die Räder der höherliegenden Fahrzeugachse ebenfalls gebremst.

Weiter ist aus der US 3880471 A eine Fluiddrucksteuervorrichtung bekannt. Die Lösung bezieht sich auf hydraulische Bremssysteme für Kraftfahrzeuge und insbesondere auf ein verbessertes Dosierventil, das den Fluidstrom zu den Vorderradscheibenbremsen eines Fahrzeugs regelt, das mit Trommelbremsen an den Hinterrädern ausgestattet ist, so dass die vorderen und hinteren Bremsen sind im Wesentlichen gleichzeitig angewendet.

### Darstellung der Erfindung

Die Aufgabe der Erfindung, die oben genannten Nachteile des bisherigen Standes der Technik zu beseitigen, wird durch die vorliegende erfindungsgemäße technische Lösung gelöst.

Die Aufgabe wird durch eine Vorrichtung zur Betätigung einer Bremsanlage eines Kraftfahrzeuges gelöst, wobei die Bremsanlage Scheibenbremsen der Vorderachse mit Auflagedruck der Scheibenbremselemente und Trommelbremsen der Hinterachse mit Auflagedruck der Trommelbremselemente umfasst, wobei die Vorrichtung gebildet wird durch eine ESC-Einheit mit einer Pumpe , durch einer verbindenden Bremsrohrleitung und durch wenigstens einen an die ESC-Einheit angeschlossenen Eingangsgeber zur Übersendung von den Betriebzustand des Fahrzeugs charakterisierenden Signalen. Die Darstellung der Erfindung liegt darin, dass die ESC-Einheit ferner ein Logikmodul umfasst, das mit der Pumpe verbunden ist, wobei die ESC-Einheit so ausgelegt ist, dass nach der Aktivierung des Logikmoduls der Wert des den aktuellen Betriebszustand entsprechenden Auflagedrucks der Trommelbremselemente um den Differenzwert zwischen dem Auflagedruck der Trommelbremselemente vor der Aktivierung der Logikeinheit und dem Auflagedruck der Scheibenbremselemente vor der Aktivierung der Logikeinheit höher ist.

Die den Betriebzustand des Fahrzeuges charakterisierenden Signalen das Signal der Funktion eines Bremsschalters, das Signal eines Wärmemodels der Trommelbremse, das Signal einer Fahrbahnneigung, das Signal einer Geschwindigkeit, das Signal eines Drucks in der, das Signal einer Bremskreisregelung, das Signal einer Bremszeit sind.

### Übersicht der Figuren der Zeichnungen

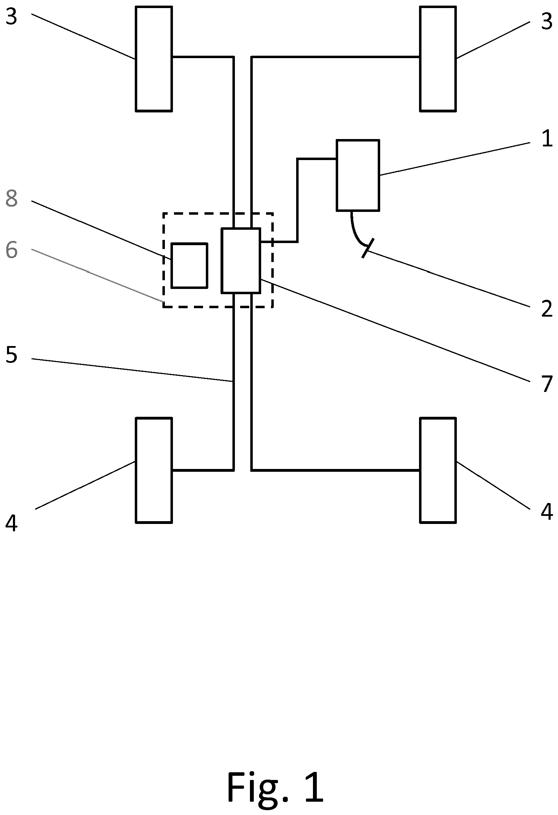

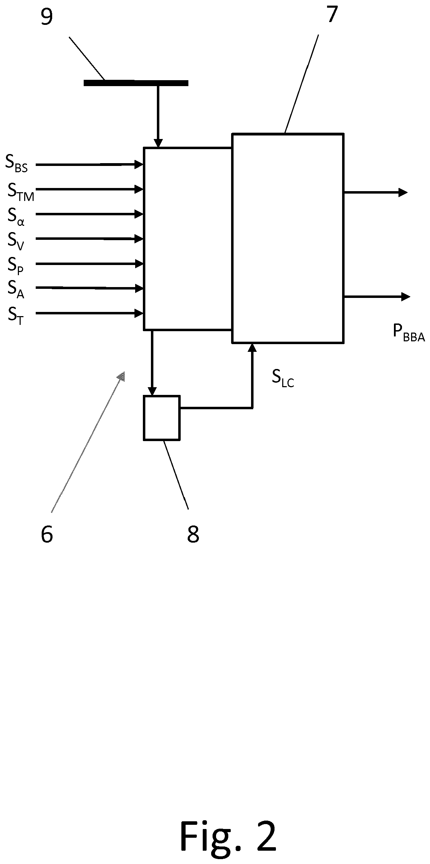

Die Erfindung wird anhand der Ausführungsbeispiele gemäß den beigefügten Zeichnungen näher erläutert, in denen die Fig. 1 schematisch eine Bremsanlage eines Kraftfahrzeuges und die Fig. 2 ein Blockschema der erfindungsgemäßen Vorrichtung zeigen.

### Ausführungsbeispiel der Erfindung

Die Fig. 1. stellt schematisch eine Bremsanlage eines Kraftfahrzeuges dar, die einen Hauptbremszylinder 1, der mit einem Bremspedal 2 betätigt wird, Scheibenbremsen 3 der Vorderachse, Trommelbremsen 4 der Hinterachse und eine verbindende Bremsrohrleitung 5 umfasst. Der Auflagedruck der Scheibenbremselemente P_{KB} beträgt 0,05 MPa, während der Auflagedruck der Trommelbremselemente P_{BB} bei 0,4 - 0,5 MPa liegt. Die Vorrichtung zur Betätigung der Bremsanlage wird unter anderem durch eine ESC-Einheit 6 mit einer Pumpe 7 und einem Logikmodul 8, das als DBB (Drum Brake Booster) bezeichnet wird, gebildet. Die ESC-Einheit 6 (Electronic Stability Control) ist ein elektronisches Stabilisierungssystem, das beim Verlust der Bodenhaftung in die Fahrzeugsteuerung eingreift. Sie ist mit CAN-Bus 9 sowie mit weiteren Gebern verbunden, welche durch gesendete Signale den Betriebszustand des Fahrzeuges charakterisieren. Die den Betriebszustand des Fahrzeuges charakterisierenden Signale sind das Signal der Funktion des Bremsschalters S_{BS}, das Signal des Wärmemodels der Trommelbremse S_{TM}, das Signal der Fahrbahnneigung Sₐ, das Signal der Geschwindigkeit S_{V}, das die Winkelgeschwindigkeit einzelner Fahrzeugräder überwacht, das Signal des Drucks in der Bremsanlage S_{P}, das Signal der Bremskreisregelung S_{A} (z.B. bei Aktivierung des Antiblockiersystems ABS), das Signal der Bremszeit S_{T}.

Während des Fahrzeugbetriebes werden die genannten Signale von der ESC-Einheit 6 durchgehend ausgewertet. Bei der Fahrt des Fahrzeuges kann eine Situation auftreten, wo bei einer langgezogenen Bergabfahrt durch Bremsen mit niedrigem Druck in der Bremsanlage eine konstante Fahrzeuggeschwindigkeit gehalten wird, wodurch eine Überbelastung der vorderen Scheibenbremsen 3 droht. Aufgrund der den Betriebszustand des Fahrzeuges charakterisierenden Signale, welche diesem konkreten Betriebszustand entsprechen, wird durch Signal S_{LC} mittels des Logikmoduls 8 der Druck in den hinteren Trommelbremsen 4 um entsprechenden Wert erhöht, welcher der Differenz zwischen dem Auflagedruck der Trommelbremselemente P_{KB} an der Vorderachse und dem Auflagedruck der Trommelbremselemente P_{BB} an der Hinterachse entspricht.

### Bezugszeichenliste

- 1.: Hauptbremszylinder
- 2.: Bremspedal
- 3.: Scheibenbremse
- 4.: Trommelbremse
- 5.: Bremsrohrleitung
- 6.: ESC-Einheit
- 7.: Pumpe
- 8.: Logikmodul
- 9.: CAN-Bus
- S_{BS}: Signal der Funktion eines Bremsschalters
- S_{TM}: Signal des Wärmemodels einer Trommelbremse
- Sₐ: Signal einer Fahrbahnneigung
- S_{V}: Signal einer Geschwindigkeit
- Sp: Signal eines Drucks in der Bremsanlage
- S_{A}: Signal einer Bremskreisregelung
- S_{T}: Signal einer Bremszeit
- S_{LC}: Signal eines Logikmoduls
- P_{KB}: Auflagedruck der Scheibenbremselemente
- P_{BB}: Auflagedruck der Trommelbremselemente
- P_{BBA}: aktivierter Auflagedruck der Trommelbremselemente

## Patentansprüche

1. Vorrichtung zur Betätigung einer Bremsanlage eines Kraftfahrzeuges, wobei die Bremsanlage Scheibenbremsen (3) der Vorderachse mit Auflagedruck der Scheibenbremselemente (p_{KB}) und Trommelbremsen (4) der Hinterachse mit Auflagedruck der Trommelbremselemente (p_{BB}) umfasst, wobei die Vorrichtung gebildet wird durch eine ESC-Einheit (6) mit einer Pumpe (7), durch einer verbindender Bremsrohrleitung (5) und durch wenigstens einen an die ESC-Einheit (6) angeschlossenen Eingangsgeber zur Übersendung von den Betriebzustand des Fahrzeugs charakterisierenden Signalen, **dadurch gekennzeichnet, dass** die ESC-Einheit (6) ferner ein Logikmodul (8) umfasst, das mit der Pumpe (7) verbunden ist, wobei die ESC-Einheit so ausgelegt ist, dass nach der Aktivierung des Logikmoduls (8) der Wert des den aktuellen Betriebszustand entsprechenden Auflagedrucks der Trommelbremselemente (P_{BBA}) um den Differenzwert zwischen dem Auflagedruck der Trommelbremselemente (p_{BB}) vor der Aktivierung der Logikeinheit und dem Auflagedruck der Scheibenbremselemente (p_{KB}) vor der Aktivierung der Logikeinheit höher ist.

2. Vorrichtung zur Betätigung der Bremsanlage eines Kraftfahrzeuges nach Anspruch 1 **dadurch gekennzeichnet, dass** die den Betriebzustand des Fahrzeuges charakterisierenden Signalen das Signal der Funktion eines Bremsschalters (S_{BS}), das Signal eines Wärmemodels der Trommelbremse (S_{TM}), das Signal einer Fahrbahnneigung (Sₐ), das Signal einer Geschwindigkeit (Sᵥ), das Signal eines Drucks in der Bremsanlage (Sₚ), das Signal einer Bremskreisregelung, das Signal einer Bremszeit (S_{T}) sind.

## Claims

1. A device for actuating a brake system of a motor vehicle, wherein the brake system comprises disk brakes (3) of the front axle with bearing pressure of the disk brake elements (p_{KB}) and drum brakes (4) of the rear axle with bearing pressure of the drum brake elements (p_{BB}), wherein the device is formed by an Electronic Stability Control (ESC) unit (6) with a pump (7), by a connecting brake pipeline (5) and by at least one input transmitter connected to the ESC unit (6) for the transmission of signals characterizing the operating state of the vehicle, **characterized in that** the ESC unit (6) further comprises a logic module (8), which is connected to the pump (7), wherein the ESC unit is designed so that after the activation of the logic module (8) the value of the bearing pressure of the drum brake elements (P_{BBA}) corresponding to the current operating state is higher by the difference value between the bearing pressure of the drum brake elements (p_{BB}) before the activation of the logic unit and the bearing pressure of the disk brake elements (p_{KB}) before the activation of the logic unit.

2. The device for actuating the brake system of a motor vehicle according to claim 1 **characterized in that** the signals characterizing the operating state of the vehicle are the signal of the function of the brake switch (S_{BS}), the signal of a thermal model of the drum brake (S_{TM}), the signal of a road inclination (S_{α}), the signal of a velocity (Sᵥ), the signal of a pressure in the brake system (Sₚ), the signal of a brake circuit control, the signal of a braking time (S_{T}).

## Revendications

1. Dispositif pour l'actionnement d'une installation de freinage d'un véhicule automobile, dans lequel l'installation de freinage comprend des freins à disques (3) de l'essieu avant avec une pression d'appui des éléments des freins à disques (p_{KB}) et des freins à tambours (4) de l'essieu arrière avec une pression d'appui des éléments de freins à tambours (p_{BB}), dans lequel le dispositif est constitué d'une unité ESC (6) avec une pompe (7), d'une canalisation de freinage de liaison (5) et d'au moins un capteur d'entrée raccordé à l'unité ESC (6) pour la transmission des signaux caractérisant l'état de fonctionnement du véhicule, **caractérisé en ce que** l'unité ESC (6) comprend en outre un module logique (8), qui est relié à la pompe (7), dans lequel l'unité ESC est conçu de façon à ce que, après l'activation du module logique (8), la valeur de la pression d'appui des éléments des freins à tambours (p_{BBA}) correspondant à l'état de fonctionnement actuel soit augmentée de la valeur différentielle entre la pression d'appui des éléments des freins à tambours (p_{BB}) avant l'activation de l'unité logique et la pression d'appui des éléments des freins à disques (p_{KB}) avant l'activation de l'unité logique.

2. Dispositif pour l'actionnement de l'installation de freinage d'un véhicule automobile selon la revendication 1, **caractérisé en ce que** les signaux caractérisant l'état de fonctionnement du véhicule sont le signal du fonctionnement d'un commutateur de freinage (S_{BS}), le signal d'un modèle thermique du frein à tambour (S_{TM}), le signal d'une inclinaison de la chaussée (Sa), le signal d'une vitesse (Sᵥ), le signal d'une pression dans l'installation de freinage (Sₚ), le signal d'une régulation du circuit de freinage, le signal d'un temps de freinage (S_{T}).
